Europäisches Patentamt

European Patent Office

Office européen des brevets

(19)

(11) EP 0 822 005 A2

(12) **EUROPEAN PATENT APPLICATION**

(43) Date of publication:
**04.02.1998 Bulletin 1998/06**

(51) Int Cl.6: **B01J 23/58**, B01J 23/62,
B01J 23/89, B01D 53/86,
B01D 53/94

(21) Application number: **97305800.1**

(22) Date of filing: **31.07.1997**

(84) Designated Contracting States:
**AT BE CH DE DK ES FI FR GB GR IE IT LI LU MC
NL PT SE**

(30) Priority: **31.07.1996 JP 219201/96
05.09.1996 JP 253958/96**

(71) Applicant: **N.E. Chemcat Corporation
Minato-ku, Tokyo 105 (JP)**

(72) Inventors:
• **Kosaki, Yukio
Numazu-shi, Shizuoka-ken 410 (JP)**

• **Seshimo, Hiroo
Numazu-shi, Shizuoka-ken 410 (JP)**
• **Kurabayashi, Katsumi
Ichikawa-shi, Chiba-ken, 272-01 (JP)**

(74) Representative: **Marlow, Nicholas Simon
Reddie & Grose
16, Theobalds Road
London WC1X 8PL (GB)**

(54) **Catalyst and method for purifying exhaust gases**

(57) The invention provides a catalyst purifying exhaust gases which is effective in removing nitrogen oxides from exhaust gas comprising a reducing component that contains hydrocarbons and carbon monoxide, oxygen of such an amount that is over the stoichiometric amount of oxygen necessary for oxidizing said reducing component, and nitrogen oxides. The catalyst produces high NOx removal from exhaust gas, and is durable in high-temperature exhaust gas containing water and SOx. The invention also provides a method of using the catalyst for purifying exhaust gas.

Provided is a catalyst purifying exhaust gases, which comprises (a) iridium, (b) at least one element selected from the group consisting of alkali metals and alkaline earth metals, and (c) at least one element selected from the group consisting of elements of the Group IIIB in the Periodic Table, elements of the Group IVA in the Periodic Table (except carbon element), and iron family elements, as carried by an oxide of at least one element selected from titanium family elements. Also provided is an exhaust gas purifying method, which comprises contacting exhaust gas with the catalyst.

## Description

### Field of the Invention

The present invention relates to a catalyst and method for purifying exhaust gases which is effective in removing nitrogen oxides (NOx) from exhaust gas, particularly exhaust gases containing excess oxygen, exhausted from internal combustion engines, boilers, gas turbines and others.

### Background of the invention

Nitrogen oxides (NOx) exhausted into air from internal combustion engines and others can cause photochemical smog and acid rain; therefore, the matter is pressing to prevent such discharge of nitrogen oxides from the viewpoint of the protection of the environment.

Recently, for preventing the global environment from being warmed up, it is required to control the discharge of carbon dioxide ($CO_2$) in air. In that situation, attention is given to so-called lean burn engines in which gasoline is burnt at an air/fuel (A/F) ratio that is larger than the stoichiometric A/F ratio of 14.6 to thereby reduce the gasoline consumption (that is, to reduce the discharge of $CO_2$ in air).

Lean burn systems are employed in diesel engines, boilers and others, and are being employed even in gas engines, gas turbines and the like. For those, it is also required to remove NOx from their discharges.

However, for the treatment of the exhaust gas discharged by such lean burn engines, the conventional, three-way-catalyst (TWC) system, which is for the treatment of exhaust gas discharged by ordinary gasoline cars and in which is used a Pt-Rh/$Al_2O_3$-type catalyst for removing all of NOx, carbon dioxide (CO) and hydrocarbons (HC) while controlling the air/fuel ratio to be nearly the stoichiometric one, is not effective.

As the catalysts for removing NOx from exhaust gas discharged by lean burn engines, there have heretofore been proposed copper ion-exchanging zeolite catalysts (for example, see Japanese Patent Application Laid-Open No. 63-100919), noble metal ion-exchanging zeolite catalysts (for example, see Japanese Patent Application Laid-Open No. 1-135541), noble metal-carrying, porous metal oxide catalysts (for example, see Japanese Patent Application Laid-Open No. 3-221144) and so on.

In addition, also known is a catalyst comprising iridium and an alkali metal as carried by a refractory, inorganic oxide carrier such as alumina or the like (see Japanese Patent Publication No. 56-54173).

The present applicant has already found that a catalyst comprising iridium as carried by a carrier of at least one selected from metal carbides and metal nitrides (see Japanese Patent Application Laid-Open No. 6-31173) and a catalyst comprising iridium and an alkaline earth metal as carried by said carrier (see Japanese Patent Application Laid-Open No. 7-31884) have the ability to enhance the selective reducing activity of hydrocarbons specific to NOx even in the presence of an excessive amount of oxygen.

However, the conventional methods mentioned hereinabove are problematic. For the copper ion-exchanging zeolite catalysts and the noble metal ion-exchanging zeolite catalysts, they are irreversibly inactivated by water vapor existing in exhaust gas, at high temperatures falling between 650 and 700°C within a few hours, and therefore could not be put to practical use in such high-temperature conditions.

Owing to the strong catalytic activity of the noble metal for oxidation in them, the noble metal-carrying, porous metal oxide catalysts are problematic in that hydrocarbons (HC), which are to act as the reducing agent for NOx, react predominantly with an excessive amount of oxygen existing in exhaust gas, thereby failing in increasing the reduction of NOx in such oxygen-rich exhaust gas. [The terminology "hydrocarbons" as referred to herein shall include not only limited pure hydrocarbons but also their partial oxides of oxygen-containing hydrocarbons, such as alcohols, ethers, ketones and others.]

For the catalyst comprising iridium and an alkali metal as carried by a refractory, inorganic oxide carrier such as alumina or the like (Japanese Patent Publication No. 56-54173), its catalytic ability was demonstrated in the examples of the publication in which the catalyst was applied to exhaust gas having an oxygen concentration of 1.5 % or lower. The exhaust gas of that type resulted from the burning at a ratio, A/F of about 15, which is near to the stoichiometric A/F ratio of 14.6. In these examples, the catalyst produced high removal of NOx from exhaust gas having an oxygen concentration of 0.9 %; but when applied to exhaust gas having an oxygen concentration of 1.5 %, its NOx-removing activity was reduced to about 50 %.

The catalyst comprising iridium as carried by a carrier of at least one selected from metal carbides and metal nitrides and the catalyst comprising iridium and an alkaline earth metal as carried by said carrier are problematic in that their activities are lowered when exposed to exhaust gas having a high oxygen concentration at high temperatures. Therefore, these catalysts are not always satisfactory.

The present invention has been made in order to solve the above-mentioned problems in the prior art, and its object is to provide a catalyst purifying exhaust gases which is applicable to exhaust gas comprising a reducing component that contains hydrocarbons and carbon monoxide, oxygen of such an amount that is over the stoichiometric amount of oxygen necessary for oxidizing said reducing component, and nitrogen oxides, while producing high nitrogen oxide removal from said exhaust gas, and which has excellent high-temperature durability in the presence of water and SOx, and also to provide a method of using said catalyst for purifying exhaust gas.

Summary of the invention

The present inventors have found that the above-mentioned object of the present invention can be attained by a catalyst which comprises (a) iridium, (b) at least one element selected from the group consisting of alkali metals and alkaline earth metals, and (c) at least one element selected from the group consisting of elements of the Group IIIB in the Periodic Table, elements of the Group IVA in the Periodic Table (except carbon element), and iron family elements, as carried by an oxide of at least one element selected from titanium family elements.

Specifically, the present invention provides a catalyst purifying exhaust gases which comprises (a) iridium, (b) at least one element selected from the group consisting of alkali metals and alkaline earth metals, and (c) at least one element selected from the group consisting of elements of the Group IIIB in the Periodic Table, elements of the Group IVA in the Periodic Table (except carbon element), and iron family elements, as carried by an oxide of at least one element selected from titanium family elements; and provides a method of using said catalyst for purifying exhaust gas.

In detail, the present invention provides a catalyst purifying exhaust gases which comprises (a) iridium, (b) at least one element selected from the group consisting of alkali metals and alkaline earth metals, and (c) at least one element selected from the group consisting of yttrium, rare earth elements, silicon, germanium, tin, and nickel, as carried by an oxide of at least one element selected from titanium family elements; and provides a method of using said catalyst for purifying exhaust gas.

In more detail, the present invention provides a catalyst purifying exhaust gases which comprises (a) iridium, (b) at least one element selected from the group consisting of alkali metals and alkaline earth metals, and (c) at least one element selected from the group consisting of yttrium, lanthanum, cerium, praseodymium, neodymium, silicon, germanium, tin, and nickel, as carried by an oxide of at least one element selected from titanium family elements; and provides a method of using said catalyst for purifying exhaust gas.

In further more detail, the present invention provides the above-mentioned, exhaust gas purifying catalyst which is for purifying exhaust gas comprising a reducing component that contains hydrocarbons and carbon monoxide, oxygen of such an amount that is over the stoichiometric amount of oxygen necessary for oxidizing said reducing component, and nitrogen oxides; and provides a method of using said catalyst for purifying exhaust gas of that type.

Detailed description of the invention

The present invention is described in detail hereinunder.

In the present invention, the oxide of at least one element selected from titanium family elements is the carrier for the catalyst, while functioning as a promoter for the catalyst. For conventional carriers of alumina, silicon carbide and the like, their activity points are readily deteriorated in oxygen-rich atmospheres at high temperatures, thereby resulting in that the activity of the catalysts carried by such conventional carriers is lowered. As opposed to these, the carrier of a titanium family oxide to be used in the present invention can still maintain its activity points even in oxygen-rich atmospheres at high temperatures, while rather producing additional activity points in such conditions. Therefore, even if the catalyst of the invention carried by the carrier of that type is exposed to such high-temperature atmospheres, its activity is higher than its original activity. The carrier may be an oxide of one titanium family element or may be composed of two or more oxides of titanium family elements.

The oxide of a titanium family element preferably has a BET surface area of 35 $m^2/g$ or smaller, more preferably from 0.1 to 30 $m^2/g$. Of the titanium family elements, preferred are titanium and zirconium. Of their oxides, preferred are titanium oxide and zirconium oxide.

The active components to be carried by the carrier are referred to. Examples of the component (b) which is at least one element selected from the group consisting of alkali metals and alkaline earth metals include lithium, sodium, potassium, magnesium, calcium, strontium and barium. One or more of these elements are used in the invention. Of these elements, preferred are sodium, potassium, magnesium and barium.

Examples of the active component (c) to be carried by the carrier, which is at least one element selected from elements of the Group IIIB in the Periodic Table, elements of the Group IVA in the Periodic Table (except carbon element), and iron family elements, include scandium, yttrium, rare earth elements, silicon, germanium, tin, iron, cobalt, and nickel. One or more of these elements are used in the invention. Of these elements, preferred are yttrium, lanthanum, cerium, praseodymium, neodymium, silicon, germanium, tin, and nickel. Where two or more of these elements are combined, the second component is preferably silicon, yttrium or a rare earth element.

The condition of the active components (a), (b) and (c) existing in the catalyst of the present invention is not specifically defined. For example, they may exist therein in the form of free metals, oxides of the elements, alloys of the elements, composite oxides of the elements, or mixtures of these.

The amount of iridium to be carried by the carrier is not specifically defined. Preferably, however, it may be from 0.1 to 20 % by weight, more preferably from 0.5 to 15 % by weight, in terms of the metal iridium relative to the weight of the catalyst. The amount to be carried of at least one element selected from the group consisting of alkali metals and alkaline earth metals is not also specifically defined. Preferably, however, it is from 0.05 to 40 times, more preferably from 0.1 to 20 times in terms of the atomic ratio to iridium.

The amount of the component (c) to be carried by the carrier, which is at least one element selected from the group consisting of elements of the Group IIIB in the Periodic Table, elements of the Group IVA in the Periodic Table (except carbon element), and iron family elements, is not also specifically defined. Preferably, however, it is from 0.01 to 120 times, more preferably from 0.02 to 60 times in terms of the atomic ratio to iridium. Where the component (c) is one element, its amount is preferably from 0.01 to 80 times, more preferably from 0.02 to 40 times in terms of the atomic ratio to iridium.

Preferably, the component (c) constituting the catalyst of the present invention is composed of two or more elements, since the active components (a), (b) and (c) in the catalyst act to catalyze the NOx removal more efficiently and therefore the activity of the catalyst is higher. The second element constituting the component (c) is preferably yttrium, lanthanum, cerium, praseodymium or silicon. The amount of the second element to be carried by the carrier is not specifically defined. Preferably, however, it may be from 0.05 to 40 times, more preferably from 0.1 to 20 times in terms of the atomic ratio to iridium.

And, the followings are the descriptions of methods for producing the catalyst of the invention.

There is no limitation on the production of the catalyst of the invention. Employable are any known methods of, for example, evaporation to dryness, spray-drying, water absorption, or dipping. One example is a simultaneous fixing method in which a solution or suspension comprising raw material salts of the active components (a), (b) and (c) is added to a powdery carrier, and the resulting mixture is evaporated to dryness and then baked to obtain the catalyst of the invention. Another example is a serial fixing method in which a raw material salt of the active component (a) is first added to a powdery carrier, then the resulting mixture is evaporated to dryness and baked whereby the active component (a) is fixed onto the carrier to be an insoluble compound or metal thereon, and thereafter the active components (b) and (c) are fixed onto the carrier in that order and in the same manner as in the fixation of the active component (a); or alternatively, the active component (c) is first fixed onto the carrier, and thereafter the active components (b) and (a) are fixed thereonto in that order. Where the active component (c) is composed of two or more elements, also employable are the same methods as those mentioned above.

To produce the catalyst of the present invention, the starting raw materials of the active components (a), (b) and (c) are not specifically defined.

The starting raw material of the active component (a) may be a water-soluble salt of iridium, which includes, for example, iridium trichloride ($IrCl_3$), chloroiridic acid ($H_2IrCl_6$), sodium chloroiridate ($Na_3IrCl_6$), sodium chloroiridate ($Na_2IrCl_6$), iridium nitrate [$Ir(NO_3)_4$], iridium sulfate [$Ir(SO_4)_2$], etc. Also employable herein is a solution of an iridium carbonyl such as $Ir_3(CO)_{12}$ or an organic iridium complex such as $IrCl(CO)(PPh_3)_2$ as dissolved in an organic solvent such as hexane, acetone, chloroform or ethanol.

The starting raw material of potassium, which is an alkali metal for the active component (b), may include, for example, potassium chloride (KCl), potassium carbonate ($K_2CO_3$), potassium nitrate ($KNO_3$), potassium acetate ($CH_3COOK$), potassium sulfate ($K_2SO_4$), potassium hydroxide (KOH), etc. The starting raw material of magnesium, which is an alkaline earth metal for the active component (b), may include, for example, magnesium chloride ($MgCl_2$), basic magnesium carbonate, magnesium nitrate hexa-hydrate [$Mg(NO_3)_2 \cdot 6H_2O$], magnesium acetate tetra-hydrate [$(CH_3COO)_2Mg \cdot 4H_2O$], magnesium sulfate ($MgSO_4$), magnesium hydroxide [$Mg(OH)_2$], etc. The starting raw materials of the other alkali metals and alkaline earth metals may also be chlorides, carbonates, nitrates, acetates, sulfates and hydroxides, like those of potassium and magnesium mentioned hereinabove.

The starting raw materials of the elements for the active component (c) may include, for example, chlorides, carbonates, nitrates, acetates, sulfates and hydroxides, and even complexes of the individual elements.

For example, the starting raw materials of yttrium includes various yttrium chlorides ($YCl_3$, $YCl_3 \cdot 6H_2O$), yttrium nitrate hexa-hydrate [$Y(NO_3)_3 \cdot 6H_2O$], yttrium sulfate [$Y_2(SO_4)_3$], etc.

The starting raw material of neodymium includes, for example, neodymium nitrate hexa-hydrate [$Nd(NO_3)_3 \cdot 6H_2O$], neodymium acetate [$Nd(CH_3CO_2)_3$], neodymium chloride hexa-hydrate ($NdCl_3 \cdot 6H_2O$), neodymium sulfate octa-hydrate [$Nd_2(SO_4)_3 \cdot 8H_2O$], neodymium carbonate octa-hydrate [$Nd_2(CO_3)_3 \cdot 8H_2O$], etc. Of these, especially preferred are the nitrate, acetate and chloride having a high degree of solubility in a solvent of water.

The starting raw material of lanthanum includes, for example, lanthanum chloride hepta-hydrate [$LaCl_3 \cdot 7H_2O$], ammonium lanthanum carbonate [$(NH_4)La(CO_3)_2$], lanthanum nitrate hexa-hydrate [$La(NO_3)_3 \cdot 6H_2O$], lanthanum acetate 1.5-hydrate [$La(CH_3COO)_3 \cdot 1.5H_2O$], lanthanum sulfate nona-hydrate [$La_2(SO_4)_2 \cdot 9H_2O$], etc. Of these, especially preferred are the nitrate, chloride and acetate having a high degree of solubility in a solvent of water. The starting raw materials of cerium and praseodymium may also be chlorides, carbonates, nitrates, acetates and sulfates, like those of lanthanum mentioned hereinabove.

The starting raw material of silicon includes, for example, silicon tetrachloride ($SiCl_4$), silicon tetrabromide ($SiBr_4$), and also various alkoxides such as tetramethoxysilane [$Si(OCH_3)_4$], tetraethoxysilane [$Si(OC_2H_5)_4$], etc.

The starting raw material of tin includes, for example, various oxides ($SnO$, $SnO_2$), stannous chloride x-hydrate ($SnCl_2 \cdot xH_2O$), stannous acetate [$Sn(CH_3COO)_2$], various tin sulfates [$SnSO_4$, $Sn(SO_4)_2$], etc.

The starting raw material of germanium includes, for example, various germanium oxides ($GeO$, $GeO_2$), various alkali metal germanates (e.g., $Na_2GeO_4$, $Na_2GeO_3$, $Na_2GeO_2O_5$, etc.), and also various alkoxides such as tetramethoxy germanium [$Ge(OCH_3)_4$], tetraethoxy germanium [$Ge(OC_2H_5)_4$]. The starting raw material of nickel may also be in any form of oxides, chlorides, nitrates, sulfates and acetates.

If desired, both the active component (b) and the active component (c) or (a) can be fixed onto the carrier at the same time. In that case, usable are starting raw materials comprising the elements for the both components. For example, where the component (b) is fixed onto the carrier along with an element of silicon, used is a silicate compound selected from various potassium silicates ($K_2SiO_3$, $K_2OSi_4O_9 \cdot H_2O$), various sodium silicates ($m\text{-}Na_2SiO_3$, $o\text{-}Na_4SiO_4$, $Na_2Si_2O_5$, $Na_2Si_4O_9$), various magnesium silicates ($o\text{-}Mg_2SiO_4$, $m\text{-}MgSiO_3$, $Mg_3Si_4O_{11} \cdot H_2O$, $2MgO \cdot 3SiO_2 \cdot nH_2O$), various barium silicates ($o\text{-}Ba_2SiO_4$, $m\text{-}BaSiO_3$, $meso\text{-}BaSi_2O_5$), etc.

In the above-mentioned simultaneous or serial fixing method, the active components (a), (b) and (c) which have been fixed onto the carrier as the catalyst precursors are baked and decomposed. The atmosphere in which said baking decomposition is effected varies, depending on the type of the precursors. For example, the precursors may be baked and decomposed in air, in vacuum, in an inert gas stream of nitrogen or the like, or in a hydrogen stream. The baking temperature is preferably between 300 and 1,000°C, more preferably between 600 and 900°C. The baking time may be freely varied, but is generally between 5 minutes and 20 hours or so, preferably between 10 minutes and 5 hours. For example, the precursors may be baked in air at a temperature between 600 and 800°C, and thereafter post-treated in a nitrogen stream or a hydrogen stream at a temperature between 600 and 900°C.

The mode of using the catalyst of the present invention for purifying exhaust gas is not specifically defined. For example, mentioned are an embodiment of loading the catalyst of the invention into a predetermined space, and another embodiment of shaping the catalyst into a predetermined form. For the latter case of shaping the catalyst into a predetermined form, for example, the catalyst may be mixed with a suitable binder and then shaped, or alternatively, it may be directly shaped in the absence of a binder. Prior to fixing the active components onto the carrier, if desired, the carrier may be shaped into a predetermined form. The form of the catalyst to be shaped is not specifically defined, but may include, for example, spheres, pellets, cylinders, honeycombs, spirals, granules, rings, etc. The form and the size of the catalyst may be suitably determined, depending on the conditions in which the catalyst is used.

If desired, the catalyst of the invention may be put over the surface of a supporting substrate of a refractory material to give a catalyst-coated structure. The supporting refractory substrate may be a honeycomb or foamed structure of, for example, ceramics such as cordierite, mullite, etc.; or metals such as stainless steel, etc.

To produce the catalyst-coated structure, the catalyst of the present invention may be applied onto the surface of the above-mentioned, supporting substrate along with or in the absence of a suitable binder. For this, for example, employable is wash-coating. Alternatively, the supporting substrate is first coated with only a carrier, and thereafter the active components may be fixed onto the carrier to give the intended, catalyst-coated structure.

As the binder, employable is any known inorganic binder including, for example, alumina sol, silica sol, titania sol, etc. To apply the catalyst which is powdery onto the supporting substrate, for example, alumina sol and water are added to the powdery catalyst and kneaded to give a slurry, and thereafter the supporting substrate is dipped into the resulting slurry, taken out, dried and baked.

The amount of the catalyst to be put on the supporting substrate is not specifically defined, but may be preferably from 10 to 200 g/liter, more preferably from 50 to 150 g/liter, per the unit volume of the supporting substrate.

Now, the exhaust gas purifying method of the invention is described below.

The' purifying method of the invention comprises contacting exhaust gas comprising a reducing component that contains hydrocarbons and carbon monoxide, oxygen of such an amount that is over the stoichiometric amount of oxygen necessary for oxidizing said reducing component, and nitrogen oxides, with the catalyst of the invention. The gas space velocity of the exhaust gas to be contacted with the catalyst is not specifically defined, but may be preferably from 5,000 to 200,000/hr, more preferably from 10,000 to 150,000/hr. To attain the selective reduction of NOx in the exhaust gas to be treated with the catalyst of the invention, the temperature of the exhaust gas just passing through the inlet of the catalyst is preferably between 100 and 700°C, more preferably between 200 and 600°C.

In the exhaust gas to which the purifying method of the present invention is directed, the ratio by weight of the oxidizing component to the reducing component, A/F, is preferably larger than the stoichiometric ratio (A/F = 14.6; $O_2$ concentration = 0.5 %), or that is, the reducing component is smaller than the stoichiometric amount to give A/F > 14.6. The NOx-removing capacity of the catalyst of the present invention is excellent when exposed to an atmosphere at about the stoichiometric ratio, but its NOx-removing capacity is still excellent even in an oxygen-rich atmosphere having A/F > 17. In such an oxygen-rich atmosphere, the conventional noble metal catalysts all exhibited very poor NOx-reducing selectivity. As opposed to these, the catalyst of the present invention is still satisfactorily effective in reducing NOx in exhaust gas from lean burn engines having a ratio, A/F, of 22 (and having an oxygen concentration of 7.5 %), in the absence of any external reducing agent of HC. In such oxygen-rich condition, the catalyst of the invention catalyzes the reduction of NOx with only HC and CO existing in the exhaust gas, without requiring any additional external reducing agent of HC.

The present invention will be described in more detail with reference to several examples thereof. These examples are not intended to limit the scope of the present invention.

Example 1:

(1) 2.0 kg of deionized water was added to 95.6 g of a commercial product, $TiO_2$ powder (specific surface area: 16 $m^2$/g), and stirred for 20 minutes to prepare a $TiO_2$ slurry. To the resulting slurry, added was a mixed solution of 160 g of deionized water containing chloroiridic acid ($H_2IrCl_6$) of an amount corresponding to 1.2 g of metal iridium, 160 g of deionized water containing potassium chloride (KCl) of an amount corresponding to 0.8 g of metal potassium, and 160 g of deionized water containing neodymium nitrate hexa-hydrate [$Nd(NO_3)_3 \cdot 6H_2O$] of an amount corresponding to 2.4 g of metal neodymium. The resulting mixture was transferred onto a glass-lined dish equipped with a steam jacket, and evaporated to remove water with stirring for 4 hours.

The resulting solid was dried in an electric drier at 105°C for 16 hours, and then ground. The resulting powder was put into a quartz tray, and baked in an electric furnace in air at 800°C for 2 hours. The thus-baked powder was treated in a 100 % nitrogen stream at 800°C for 2 hours to obtain a powdery catalyst of, in terms of metal by weight, 1.2 wt. % Ir-0.8 wt.% K-2.4 wt.% Nd [Ir/K/Nd = 1/3.3/2.7 (atomic ratio)]/$TiO_2$.

(2) 180 g of deionized water and 12 g of alumina sol (alumina content: 10 wt.%) were added to 90 g of the powdery catalyst obtained in (1), and the resulting mixture was wet-milled in a ball mill for 5 hours to obtain a catalyst slurry. Core pieces each having a diameter of 1 inch and a length of 5 inches, that had been blanked out of a commercial product, 400 Cell Cordierite Honeycomb, were dipped in this slurry, and then drawn out. An air blow was applied to the thus-coated pieces to remove the excess slurry.

Next, the catalyst-coated core pieces were dried at 300°C for 20 minutes, and then baked in air at 500°C for 30 minutes. Thus were obtained Ir-K-Nd/$TiO_2$ catalyst-coated honeycomb samples (A-1), in which the amount of the catalyst coated was 100 g in terms of the dry weight per liter of the honeycomb volume.

Example 2:

In the same manner as in Example 1 except that the $TiO_2$ powder in (1) was replaced by a commercial product, $ZrO_2$ powder (specific surface area: 21 $m^2$/g), herein obtained was a powdery catalyst of 1.2 wt.% Ir-0.8 wt.% K-2.4 wt.% Nd [Ir/K/Nd = 1/3.3/2.7 (atomic ratio)]/$ZrO_2$. Using this, obtained were Ir-K-Nd/$ZrO_2$ catalyst-coated honeycomb samples (A-2).

Example 3:

In the same manner as in Example 1 except that, in (1), the amount of the $TiO_2$ powder was 87.2 g and that the amount of chloroiridic acid was 9.6 g in terms of metal iridium, herein obtained was a powdery catalyst of 9.6 wt.% Ir-0.8 wt.% K-2.4 wt.% Nd [Ir/K/Nd = 1/0.4/0.3 (atomic ratio)]/$TiO_2$. Using this, obtained were Ir-K-Nd/$TiO_2$ catalyst-coated honeycomb samples (A-3).

Example 4:

In the same manner as in Example 1 except that, in (1), the amount of the $TiO_2$ powder was 89.2 g, that the amount of potassium chloride was 2.4 g in terms of metal potassium and that the amount of neodymium nitrate hexa-hydrate was 7.2 g in terms of metal neodymium, herein obtained was a powdery catalyst of 1.2 wt.% Ir-2.4 wt.% K-7.2 wt.% Nd [Ir/K/Nd = 1/9.8/8.0 (atomic ratio)]/$TiO_2$. Using this, obtained were Ir-K-Nd/$TiO_2$ catalyst-coated honeycomb samples (A-4).

Example 5:

In the same manner as in Example 1 except that sodium chloride (NaCl) of an amount corresponding to 0.8 g of metal sodium was used in place of potassium chloride in (1), herein obtained was a powdery catalyst of 1.2 wt.% Ir-0.8 wt.% Na-2.4 wt.% Nd [Ir/Na/Nd = 1/5.6/2.7 (atomic ratio)]/$TiO_2$. Using this, obtained were Ir-Na-Nd/$TiO_2$ catalyst-

coated honeycomb samples (A-5).

Example 6:

In the same manner as in Example 1 except that magnesium chloride (MgCl$_2$) of an amount corresponding to 0.8 g of metal magnesium was used in place of potassium chloride in (1), herein obtained was a powdery catalyst of 1.2 wt.% Ir-0.8 wt.% Mg-2.4 wt.% Nd [Ir/Mg/Nd = 1/5.3/2.7 (atomic ratio)]/TiO$_2$. Using this, obtained were Ir-Mg-Nd/TiO$_2$ catalyst-coated honeycomb samples (A-6).

Example 7:

In the same manner as in Example 1 except that barium chloride (BaCl$_2$) of an amount corresponding to 0.8 g of metal barium was used in place of potassium chloride in (1), herein obtained was a powdery catalyst of 1.2 wt.% Ir-0.8 wt.% Ba-2.4 wt.% Nd [Ir/Ba/Nd = 1/0.9/2.7 (atomic ratio)]/TiO$_2$. Using this, obtained were Ir-Ba-Nd/TiO$_2$ catalyst-coated honeycomb samples (A-7).

Example 8:

In the same manner as in Example 1 except that, in (1), the amount of the TiO$_2$ powder was 94.5 g and that potassium silicate (K$_2$SiO$_3$) of an amount corresponding to 0.8 g of metal potassium and 1.1 g of metal silicon was used in place of potassium chloride, herein obtained was a powdery catalyst of 1.2 wt.% Ir-0.8 wt.% K-2.4 wt.% Nd-1.1 wt.% Si [Ir/K/Nd/Si = 1/3.3/2.7/6.3 (atomic ratio)]/TiO$_2$. Using this, obtained were Ir-K-Nd-Si/TiO$_2$ catalyst-coated honeycomb samples (A-8).

Example 9:

In the same manner as in Example 1 except that, in (1), the amount of the TiO$_2$ powder was 86.1 g and that potassium silicate (K$_2$SiO$_3$) of an amount corresponding to 0.8 g of metal potassium and 1.1 g of metal silicon was used in place of potassium chloride, herein obtained was a powdery catalyst of 9.6 wt.% Ir-0.8 wt.% K-2.4 wt.% Nd-1.1 wt.% Si [Ir/K/Nd/Si = 1/0.4/0.3/0.9 (atomic ratio)]/TiO$_2$. Using this, obtained were Ir-K-Nd-Si/TiO$_2$ catalyst-coated honeycomb samples (A-9).

Example 10:

In the same manner as in Example 1 except that, in (1), the amount of the TiO$_2$ powder was 90.8 g and that 4.8 g of ZrO$_2$ powder was added, herein obtained was a powdery catalyst of 1.2 wt.% Ir-0.8 wt.% K-2.4 wt.% Nd [Ir/K/Nd = 1/3.3/2.7 (atomic ratio)]/TiO$_2$-ZrO$_2$. Using this, obtained were Ir-K-Nd/TiO$_2$-ZrO$_2$ catalyst-coated honeycomb samples (A-10).

Example 11:

In the same manner as in Example 1 except that lanthanum nitrate hexa-hydrate [La(NO$_3$)$_3$·6H$_2$O] of an amount corresponding to 2.4 g of metal lanthanum was used in place of neodymium nitrate hexa-hydrate in (1), herein obtained was a powdery catalyst of 1.2 wt.% Ir-0.8 wt.% K-2.4 wt.% La [Ir/K/La = 1/3.3/2.8 (atomic ratio)]/TiO$_2$. Using this, obtained were Ir-K-La/TiO$_2$ catalyst-coated honeycomb samples (A-11).

Example 12:

In the same manner as in Example 11 except that the TiO$_2$ powder was replaced by a commercial product, ZrO$_2$ powder (specific surface area: 21 m$^2$/g), herein obtained was a powdery catalyst of 1.2 wt.% Ir-0.8 wt.% K-2.4 wt.% La [Ir/K/La = 1/3.3/2.8 (atomic ratio)]/ZrO$_2$. Using this, obtained were Ir-K-La/ZrO$_2$ catalyst-coated honeycomb samples (A-12).

Example 13:

In the same manner as in Example 11 except that the amount of the TiO$_2$ powder was 87.2 g and that the amount of chloroiridic acid was 9.6 g in terms of metal iridium, herein obtained was a powdery catalyst of 9.6 wt.% Ir-0.8 wt.% K-2.4 wt.% La [Ir/K/La = 1/0.4/0.3 (atomic ratio)]/TiO$_2$. Using this, obtained were Ir-K-La/TiO$_2$ catalyst-coated honey-

comb samples (A-13).

Example 14:

In the same manner as in Example 11 except that the amount of the $TiO_2$ powder was 89.2 g, that the amount of potassium chloride was 2.4 g in terms of metal potassium and that the amount of lanthanum nitrate hexa-hydrate was 7.2 g in terms of metal lanthanum, herein obtained was a powdery catalyst of 1.2 wt.% Ir-2.4 wt.% K-7.2 wt.% La [Ir/K/La = 1/9.8/8.3 (atomic ratio)]/$TiO_2$. Using this, obtained were Ir-K-La/$TiO_2$ catalyst-coated honeycomb samples (A-14).

Example 15:

In the same manner as in Example 11 except that sodium chloride (NaCl) of an amount corresponding to 0.8 g of metal sodium was used in place of potassium chloride, herein obtained was a powdery catalyst of 1.2 wt.% Ir-0.8 wt.% Na-2.4 wt.% La [Ir/Na/La = 1/5.6/2.8 (atomic ratio)]/$TiO_2$. Using this, obtained were Ir-Na-La/$TiO_2$ catalyst-coated honeycomb samples (A-15).

Example 16:

In the same manner as in Example 11 except that magnesium chloride ($MgCl_2$) of an amount corresponding to 0.8 g of metal magnesium was used in place of potassium chloride, herein obtained was a powdery catalyst of 1.2 wt.% Ir-0.8 wt.% Mg-2.4 wt.% La [Ir/Mg/La = 1/5.3/2.8 (atomic ratio)]/$TiO_2$. Using this, obtained were Ir-Mg-La/$TiO_2$ catalyst-coated honeycomb samples (A-16).

Example 17:

In the same manner as in Example 11 except that barium chloride ($BaCl_2$) of an amount corresponding to 0.8 g of metal barium was used in place of potassium chloride, herein obtained was a powdery catalyst of 1.2 wt.% Ir-0.8 wt.% Ba-2.4 wt.% La [Ir/Ba/La = 1/0.9/2.8 (atomic ratio)]/$TiO_2$. Using this, obtained were Ir-Ba-La/$TiO_2$ catalyst-coated honeycomb samples (A-17).

Example 18:

In the same manner as in Example 11 except that the amount of the $TiO_2$ powder was 94.5 g and that potassium silicate ($K_2SiO_3$) of an amount corresponding to 0.8 g of metal potassium and 1.1 g of metal silicon was used in place of potassium chloride, herein obtained was a powdery catalyst of 1.2 wt.% Ir-0.8 wt.% K-2.4 wt.% La-1.1 wt.% Si [Ir/K/La/Si = 1/3.3/2.8/6.3 (atomic ratio)]/$TiO_2$. Using this, obtained were Ir-K-La-Si/$TiO_2$ catalyst-coated honeycomb samples (A-18).

Example 19:

In the same manner as in Example 11 except that the amount of the $TiO_2$ powder was 86.1 g and that potassium silicate ($K_2SiO_3$) of an amount corresponding to 0.8 g of metal potassium and 1.1 g of metal silicon was used in place of potassium chloride, herein obtained was a powdery catalyst of 9.6 wt.% Ir-0.8 wt.% K-2.4 wt.% La-1.1 wt.% Si [Ir/K/La/Si = 1/0.4/0.3/0.9 (atomic ratio)]/$TiO_2$. Using this, obtained were Ir-K-La-Si/$TiO_2$ catalyst-coated honeycomb samples (A-19).

Example 20:

In the same manner as in Example 11 except that the amount of the $TiO_2$ powder was 90.8 g and that 4.8 g of $ZrO_2$ powder was added, herein obtained was a powdery catalyst of 1.2 wt.% Ir-0.8 wt.% K-2.4 wt.% La [Ir/K/La = 1/3.3/2.8 (atomic ratio)]/$TiO_2$-$ZrO_2$. Using this, obtained were Ir-K-La/$TiO_2$-$ZrO_2$ catalyst-coated honeycomb samples (A-20).

Example 21:

In the same manner as in Example 11 except that cerium nitrate hexa-hydrate [$Ce(NO_3)_3\cdot6H_2O$] of an amount corresponding to 2.4 g of metal cerium was used in place of lanthanum nitrate hexa-hydrate, herein obtained was a powdery catalyst of 1.2 wt.% Ir-0.8 wt.% K-2.4 wt.% Ce [Ir/K/Ce = 1/3.3/2.7 (atomic ratio)]/TiO$_2$. Using this, obtained were Ir-K-Ce/TiO$_2$ catalyst-coated honeycomb samples (A-21).

Example 22:

In the same manner as in Example 11 except that potassium silicate of an amount corresponding to 0.8 g of metal potassium and 1.1 g of metal silicon was used in place of potassium chloride and that cerium nitrate hexa-hydrate of an amount corresponding to 2.4 g of metal cerium was used in place of lanthanum nitrate hexa-hydrate, herein obtained was a powdery catalyst of 1.2 wt.% Ir-0.8 wt.% K-2.4 wt.% Ce-1.1 wt.% Si [Ir/K/Ce/Si = 1/3.3/2.7/6.3 (atomic ratio)]/TiO$_2$. Using this, obtained were Ir-K-Ce-Si/TiO$_2$ catalyst-coated honeycomb samples (A-22).

Example 23:

In the same manner as in Example 11 except that praseodymium nitrate hexa-hydrate [Pr(NO$_3$)$_3$·6H$_2$O] of an amount corresponding to 2.4 g of metal praseodymium was used in place of lanthanum nitrate hexa-hydrate, herein obtained was a powdery catalyst of 1.2 wt.% Ir-0.8 wt.% K-2.4 wt.% Pr [Ir/K/Pr = 1/3.3/2.7 (atomic ratio)]/TiO$_2$. Using this, obtained were Ir-K-Pr/TiO$_2$ catalyst-coated honeycomb samples (A-23).

Example 24:

In the same manner as in Example 11 except that potassium silicate of an amount corresponding to 0.8 g of metal potassium and 1.1 g of metal silicon was used in place of potassium chloride and that praseodymium nitrate hexa-hydrate of an amount corresponding to 2.4 g of metal praseodymium was used in place of lanthanum nitrate hexa-hydrate, herein obtained was a powdery catalyst of 1.2 wt.% Ir-0.8 wt.% K-2.4 wt.% Pr-1.1 wt.% Si [Ir/K/Pr/Si = 1/3.3/2.7/6.3 (atomic ratio)]/TiO$_2$. Using this, obtained were Ir-K-Pr-Si/TiO$_2$ catalyst-coated honeycomb samples (A-24).

Example 25:

In the same manner as in Example 11 except that yttrium nitrate hexa-hydrate [Y(NO$_3$)$_3$·6H$_2$O] of an amount corresponding to 2.4 g of metal yttrium was used in place of lanthanum nitrate hexa-hydrate, herein obtained was a powdery catalyst of 1.2 wt.% Ir-0.8 wt.% K-2.4 wt.% Y [Ir/K/Y = 1/3.3/4.3 (atomic ratio)]/TiO$_2$. Using this, obtained were Ir-K-Y/TiO$_2$ catalyst-coated honeycomb samples (A-25).

Example 26:

In the same manner as in Example 11 except that potassium silicate of an amount corresponding to 0.8 g of metal potassium and 1.1 g of metal silicon was used in place of potassium chloride and that yttrium nitrate hexa-hydrate of an amount corresponding to 2.4 g of metal yttrium was used in place of lanthanum nitrate hexa-hydrate, herein obtained was a powdery catalyst of 1.2 wt.% Ir-0.8 wt.% K-2.4 wt.% Y-1.1 wt.% Si [Ir/K/Y/Si = 1/3.3/4.3/6.3 (atomic ratio)]/TiO$_2$. Using this, obtained were Ir-K-Y-Si/TiO$_2$ catalyst-coated honeycomb samples (A-26).

Example 27:

(1) 2.0 kg of deionized water was added to 96.9 g of a commercial product, TiO$_2$ powder (specific surface area: 16 m$^2$/g), and stirred for 20 minutes to prepare a TiO$_2$ slurry. To the resulting slurry, added was a mixed solution of 160 g of deionized water containing chloroiridic acid (H$_2$IrCl$_6$) of an amount corresponding to 1.2 g of metal iridium, and 160 g of deionized water containing potassium silicate (K$_2$SiO$_3$) of an amount corresponding to 0.8 g of metal potassium and 1.1 g of metal silicon. The resulting mixture was transferred onto a glass-lined dish equipped with a steam jacket, and evaporated to remove water with stirring for 4 hours.

The resulting solid was dried in an electric drier at 105°C for 16 hours, and then ground. The resulting powder was put into a quartz tray, and baked in an electric furnace in air at 800°C for 2 hours. The thus-baked powder was treated in a 100 % nitrogen stream at 800°C for 2 hours to obtain a powdery catalyst of, in terms of metal by weight, 1.2 wt.% Ir-0.8 wt.% K-1.1 wt.% Si [Ir/K/Si = 1/3.3/6.3 (atomic ratio)]/TiO$_2$.

(2) 180 g of deionized water and 12 g of alumina sol (Al$_2$O$_3$ content: 10 wt.%) were added to 90 g of the powdery catalyst obtained in (1), and the resulting mixture was wet-milled in a ball mill for 5 hours to obtain a catalyst slurry. Core pieces each having a diameter of 1 inch and a length of 5 inches, that had been blanked out of a commercial product, 400 Cell Cordierite Honeycomb, were dipped in this slurry, and then drawn out. An air blow was applied to the thus-coated pieces to remove the excess slurry.

Next, the catalyst-coated core pieces were dried at 300°C for 20 minutes, and then baked in air at 500°C for 30 minutes. Thus were obtained Ir-K-Si/TiO$_2$ catalyst-coated honeycomb samples (A-27), in which the amount of the catalyst coated was 100 g in terms of the dry weight per liter of the honeycomb volume.

Example 28:

In the same manner as in Example 27 except that the TiO$_2$ powder in (1) was replaced by a commercial product, ZrO$_2$ powder (specific surface area: 21 m$^2$/g), herein obtained was a powdery catalyst of 1.2 wt.% Ir-0.8 wt.% K-1.1 wt.% Si [Ir/K/Si = 1/3.3/6.3 (atomic ratio)]/ZrO$_2$. Using this, obtained were Ir-K-Si/ZrO$_2$ catalyst-coated honeycomb samples (A-28).

Example 29:

In the same manner as in Example 27 except that, in (1), the amount of the TiO$_2$ powder was 88.5 g and that the amount of chloroiridic acid was 9.6 g in terms of metal iridium, herein obtained was a powdery catalyst of 9.6 wt.% Ir-0.8 wt.% K-1.1 wt.% Si [Ir/K/Si = 1/0.4/0.8 (atomic ratio)]/TiO$_2$. Using this, obtained were Ir-K-Si/TiO$_2$ catalyst-coated honeycomb samples (A-29).

Example 30:

In the same manner as in Example 27 except that, in (1), the TiO$_2$ powder was used in an amount of 93.1 g and that potassium silicate was used in an amount corresponding to 2.4 g of metal potassium and 3.3 g of metal silicon, herein obtained was a powdery catalyst of 1.2 wt.% Ir-2.4 wt.% K-3.3 wt.% Si [Ir/K/Si = 1/9.8/18.8 (atomic ratio)]/TiO$_2$. Using this, obtained were Ir-K-Si/TiO$_2$ catalyst-coated honeycomb samples (A-30).

Example 31:

In the same manner as in Example 27 except that sodium chloride (NaCl) of an amount corresponding to 0.8 g of metal sodium and tetraethoxysilane [Si(OC$_2$H$_5$)$_4$] of an amount corresponding to 1.1 g of metal silicon were used in place of potassium silicate in (1), herein obtained was a powdery catalyst of 1.2 wt.% Ir-0.8 wt.% Na-1.1 wt.% Si [Ir/Na/Si = 1/5.6/6.6 (atomic ratio)]/TiO$_2$. Using this, obtained were Ir-Na-Si/TiO$_2$ catalyst-coated honeycomb samples (A-31).

Example 32:

In the same manner as in Example 27 except that magnesium chloride (MgCl$_2$) of an amount corresponding to 0.8 g of metal magnesium and tetraethoxysilane [Si(OC$_2$H$_5$)$_4$] of an amount corresponding to 1.1 g of metal silicon were used in place of potassium silicate in (1), herein obtained was a powdery catalyst of 1.2 wt.% Ir-0.8 wt.% Mg-1.1 wt.% Si [Ir/Mg/Si = 1/5.3/6.3 (atomic ratio)]/TiO$_2$. Using this, obtained were Ir-Mg-Si/TiO$_2$ catalyst-coated honeycomb samples (A-32).

Example 33:

In the same manner as in Example 27 except that barium chloride (BaCl$_2$) of an amount corresponding to 0.8 g of metal barium and tetraethoxysilane [Si(OC$_2$H$_5$)$_4$] of an amount corresponding to 1.1 g of metal silicon were used in place of potassium silicate in (1), herein obtained was a powdery catalyst of 1.2 wt.% Ir-0.8 wt.% Ba-1.1 wt.% Si [Ir/Ba/Si = 1/0.9/6.3 (atomic ratio)]/TiO$_2$. Using this, obtained were Ir-Ba-Si/TiO$_2$ catalyst-coated honeycomb samples (A-33).

Example 34:

In the same manner as in Example 27 except that, in (1), the amount of the TiO$_2$ powder was 92.1 g and that 4.8 g of ZrO$_2$ powder was added, herein obtained was a powdery catalyst of 1.2 wt.% Ir-0.8 wt.% K-1.1 wt.% Si [Ir/K/Si = 1/3.3/6.3 (atomic ratio)]/TiO$_2$-ZrO$_2$. Using this, obtained were Ir-K-Si/TiO$_2$-ZrO$_2$ catalyst-coated honeycomb samples (A-34).

Example 35:

(1) 2.0 kg of deionized water was added to 96.9 g of a commercial product, $TiO_2$ powder (specific surface area: 16 $m^2$/g), and stirred for 20 minutes to prepare a $TiO_2$ slurry. To the resulting slurry, added was a mixed solution of 160 g of deionized water containing chloroiridic acid ($H_2IrCl_6$) of an amount corresponding to 1.2 g of metal iridium, 160 g of deionized water containing potassium chloride (KCl) of an amount corresponding to 0.8 g of metal potassium, and 160 g of deionized water containing tin chloride di-hydrate ($SnCl_2.2H_2O$) of an amount corresponding to 1.1 g of metal tin. The resulting mixture was transferred onto a glass-lined dish equipped with a steam jacket, and evaporated to remove water with stirring for 4 hours.

The resulting solid was dried in an electric drier at 105°C for 16 hours, and then ground. The resulting powder was put into a quartz tray, and baked in an electric furnace in air at 800°C for 2 hours. The thus-baked powder was treated in a 100 % nitrogen stream at 800°C for 2 hours to obtain a powdery catalyst of, in terms of metal by weight, 1.2 wt. % Ir-0.8 wt.% K-1.1 wt.% Sn [Ir/K/Sn = 1/3.3/1.5 (atomic ratio)]/$TiO_2$.

(2) 180 g of deionized water and 12 g of alumina sol (alumina content: 10 wt.%) were added to 90 g of the powdery catalyst obtained in (1), and the resulting mixture was wet-milled in a ball mill for 5 hours to obtain a catalyst slurry. Core pieces each having a diameter of 1 inch and a length of 5 inches, that had been blanked out of a commercial product, 400 Cell Cordierite Honeycomb, were dipped in this slurry, and then drawn out. An air blow was applied to the thus-coated pieces to remove the excess slurry.

Next, the catalyst-coated core pieces were dried at 300°C for 20 minutes, and then baked in air at 500°C for 30 minutes. Thus were obtained Ir-K-Sn/$TiO_2$ catalyst-coated honeycomb samples (A-35), in which the amount of the catalyst coated was 100 g in terms of the dry weight per liter of the honeycomb volume.

Example 36:

In the same manner as in Example 35 except that the $TiO_2$ powder in (1) was replaced by a commercial product, $ZrO_2$ powder (specific surface area: 21 $m^2$/g), herein obtained was a powdery catalyst of 1.2 wt.% Ir-0.8 wt.% K-2.4 wt.% Sn [Ir/K/Sn = 1/3.3/1.5 (atomic ratio)]/$ZrO_2$. Using this, obtained were Ir-K-Sn/$ZrO_2$ catalyst-coated honeycomb samples (A-36).

Example 37:

In the same manner as in Example 35 except that, in (1), the amount of the $TiO_2$ powder was 88.5 g and that the amount of chloroiridic acid was 9.6 g in terms of metal iridium, herein obtained was a powdery catalyst of 9.6 wt.% Ir-0.8 wt.% K-1.1 wt.% Sn [Ir/K/Si = 1/0.4/0.2 (atomic ratio)]/$TiO_2$. Using this, obtained were Ir-K-Sn/$TiO_2$ catalyst-coated honeycomb samples (A-37).

Example 38:

In the same manner as in Example 35 except that, in (1), the $TiO_2$ powder was used in an amount of 90.9 g, that potassium chloride of an amount corresponding to 2.4 g of metal potassium was used and that tin chloride di-hydrate of an amount corresponding to 5.5 g of metal tin was used, herein obtained was a powdery catalyst of 1.2 wt.% Ir-2.4 wt.% K-5.5 wt.% Sn [Ir/K/Sn = 1/9.8/7.4 (atomic ratio)]/$TiO_2$. Using this, obtained were Ir-K-Sn/$TiO_2$ catalyst-coated honeycomb samples (A-38).

Example 39:

In the same manner as in Example 35 except that germanium dioxide ($GeO_2$) of an amount corresponding to 1.1 g of metal germanium was used in place of tin chloride di-hydrate in (1), herein obtained was a powdery catalyst of 1.2 wt.% Ir-0.8 wt.% K-1.1 wt.% Ge [Ir/K/Ge = 1/3.3/2.4 (atomic ratio)]/$TiO_2$. Using this, obtained were Ir-K-Ge/$TiO_2$ catalyst-coated honeycomb samples (A-39).

Example 40:

In the same manner as in Example 35 except that nickel nitrate hexa-hydrate [$Ni(NO_3)_2 \cdot 6H_2O$] of an amount corresponding to 1.1 g of metal nickel was used in place of tin chloride di-hydrate in (1), herein obtained was a powdery catalyst of 1.2 wt.% Ir-0.8 wt.% K-1.1 wt.% Ni [Ir/K/Ni = 1/3.3/3.0 (atomic ratio)]/$TiO_2$. Using this, obtained were Ir-K-Ni/$TiO_2$ catalyst-coated honeycomb samples (A-40).

Example 41:

In the same manner as in Example 35 except that sodium chloride (NaCl) of an amount corresponding to 0.8 g of metal sodium was used in place of potassium chloride in (1), herein obtained was a powdery catalyst of 1.2 wt.% Ir-0.8 wt.% Na-1.1 wt.% Sn [Ir/Ba/Sn = 1/5.6/1.5 (atomic ratio)]/$TiO_2$. Using this, obtained were Ir-Na-Sn/$TiO_2$ catalyst-coated honeycomb samples (A-41).

Example 42:

In the same manner as in Example 35 except that magnesium chloride ($MgCl_2$) of an amount corresponding to 0.8 g of metal magnesium was used in place of potassium chloride in (1), herein obtained was a powdery catalyst of 1.2 wt.% Ir-0.8 wt.% Mg-1.1 wt.% Sn [Ir/Mg/Sn = 1/5.3/1.5 (atomic ratio)]/$TiO_2$. Using this, obtained were Ir-Mg-Sn/$TiO_2$ catalyst-coated honeycomb samples (A-42).

Example 43:

In the same manner as in Example 35 except that barium chloride ($BaCl_2$) of an amount corresponding to 0.8 g of metal barium was used in place of potassium chloride in (1), herein obtained was a powdery catalyst of 1.2 wt.% Ir-0.8 wt.% Ba-1.1 wt.% Sn [Ir/Ba/Sn = 1/0.9/1.5 (atomic ratio)]/$TiO_2$. Using this, obtained were Ir-Ba-Sn/$TiO_2$ catalyst-coated honeycomb samples (A-43).

Example 44:

In the same manner as in Example 35 except that, in (1), 94.5 g of the $TiO_2$ powder was used and that 160 g of deionized water containing yttrium nitrate hexa-hydrate [$Y(NO_3)_3 \cdot 6H_2O$] of an amount corresponding to 2.4 g of metal yttrium was added to the mixed solution, herein obtained was a powdery catalyst of 1.2 wt.% Ir-0.8 wt.% K-1.1 wt.% Sn-2.4 wt.% Y [Ir/K/Sn/Y = 1/3.3/1.5/4.3 (atomic ratio)]/$TiO_2$. Using this, obtained were Ir-K-Sn-Y/$TiO_2$ catalyst-coated honeycomb samples (A-44).

Example 45:

In the same manner as in Example 35 except that, in (1), 94.5 g of the $TiO_2$ powder was used and that 160 g of deionized water containing lanthanum nitrate hexa-hydrate [$La(NO_3)_3 \cdot 6H_2O$] of an amount corresponding to 2.4 g of metal lanthanum was added to the mixed solution, herein obtained was a powdery catalyst of 1.2 wt.% Ir-0.8 wt.% K-1.1 wt.% Sn-2.4 wt.% La [Ir/K/Sn/La = 1/3.3/1.5/2.8 (atomic ratio)]/$TiO_2$. Using this, obtained were Ir-K-Sn-La/$TiO_2$ catalyst-coated honeycomb samples (A-45).

Example 46:

In the same manner as in Example 35 except that, in (1), 94.5 g of the $TiO_2$ powder was used and that 160 g of deionized water containing cerium chloride hexa-hydrate ($CeCl_3 \cdot 6H_2O$) of an amount corresponding to 2.4 g of metal cerium was added to the mixed solution, herein obtained was a powdery catalyst of 1.2 wt.% Ir-0.8 wt.% K-1.1 wt.% Sn-2.4 wt.% Ce [Ir/K/Sn/Ce = 1/3.3/1.5/2.7 (atomic ratio)]/$TiO_2$. Using this, obtained were Ir-K-Sn-Ce/$TiO_2$ catalyst-coated honeycomb samples (A-46).

Example 47:

In the same manner as in Example 35 except that, in (1), 94.5 g of the $TiO_2$ powder was used and that 160 g of deionized water containing praseodymium nitrate hexa-hydrate [$Pr(NO_3)_3 \cdot 6H_2O$] of an amount corresponding to 2.4 g of metal praseodymium was added to the mixed solution, herein obtained was a powdery catalyst of 1.2 wt.% Ir-0.8 wt.% K-1.1 wt.% Sn-2.4 wt.% Pr [Ir/K/Sn/Pr = 1/3.3/1.5/2.7 (atomic ratio)]/$TiO_2$. Using this, obtained were Ir-K-Sn-Pr/$TiO_2$ catalyst-coated honeycomb samples (A-47).

Example 48:

In the same manner as in Example 35 except that, in (1), 92.1 g of the $TiO_2$ powder was used and that 4.8 g of $ZrO_2$ powder was added, herein obtained was a powdery catalyst of 1.2 wt.% Ir-0.8 wt.% K-1.1 wt.% Sn [Ir/K/Sn = 1/3.3/1.5 (atomic ratio)]/$TiO_2$-$ZrO_2$. Using this, obtained were Ir-K-Sn/$TiO_2$-$ZrO_2$ catalyst-coated honeycomb samples (A-48).

Comparative Example 1:

In the same manner as in Example 1 except that, in (1), 98.8 g of a commercial product, SiC powder (specific surface area: 15 m$^2$/g) was used in place of the $TiO_2$ powder and that potassium chloride and neodymium nitrate hexa-hydrate were not used, herein obtained was a powdery catalyst of 1.2 wt.% Ir/SiC. Using this, obtained were Ir/SiC catalyst-coated honeycomb samples (B-1).

Comparative Example 2:

In the same manner as in Example 1 except that, in (1), 98.0 g of the same SiC powder as that used in Comparative Example 1 was used in place of the $TiO_2$ powder, that magnesium chloride of an amount corresponding to 0.8 g of metal magnesium was used in place of potassium chloride and that neodymium nitrate hexa-hydrate was not used, herein obtained was a powdery catalyst of 1.2 wt.% Ir-0.8 wt.% Mg [Ir/Mg = 1/5.3 (atomic ratio)]/SiC. Using this, obtained were Ir-Mg/SiC catalyst-coated honeycomb samples (B-2).

Comparative Example 3:

In the same manner as in Example 1 except that, in (1), 98.0 g of the $TiO_2$ powder was used and that neodymium nitrate hexa-hydrate was not used, herein obtained was a powdery catalyst of 1.2 wt.% Ir-0.8 wt.% K [Ir/K = 1/3.3 (atomic ratio)]/$TiO_2$. Using this, obtained were Ir-K/$TiO_2$ catalyst-coated honeycomb samples (B-3).

Comparative Example 4:

In the same manner as in Example 1 except that, in (1), 96.4 g of the $TiO_2$ powder was used and that potassium chloride was not used, herein obtained was a powdery catalyst of 1.2 wt.% Ir-2.4 wt.% Nd [Ir/Nd = 1/2.7 (atomic ratio)]/$TiO_2$. Using this, obtained were Ir-Nd/$TiO_2$ catalyst-coated honeycomb samples (B-4).

Comparative Example 5:

In the same manner as in Example 11 except that 96.4 g of the $TiO_2$ powder was used and that potassium chloride was not used, herein obtained was a powdery catalyst of 1.2 wt.% Ir-2.4 wt.% La [Ir/La = 1/2.8 (atomic ratio)]/$TiO_2$. Using this, obtained were Ir-La/$TiO_2$ catalyst-coated honeycomb samples (B-5).

Comparative Example 6:

In the same manner as in Example 35 except that, in (1), 98.0 g of the $TiO_2$ powder was used and that potassium chloride was not used, herein obtained was a powdery catalyst of 1.2 wt.% Ir-1.1 wt.% Sn [Ir/Sn = 1/1.5 (atomic ratio)]/$TiO_2$. Using this, obtained were Ir-Sn/$TiO_2$ catalyst-coated honeycomb samples (B-6) .

Test Example 1 (for testing initial NOx removal in gasoline lean burn engine):

The NOx-removing activity of the catalyst-coated honeycomb samples (A-1 to A-48) obtained in Examples 1 to 48 and the catalyst-coated honeycomb samples (B-1 to B-6) obtained in Comparative Examples 1 to 6 was demonstrated herein, using a gasoline lean burn engine. Exhaust gas (A/F = 22; $O_2$ = 7.5 %) was passed through each catalyst-coated honeycomb sample at a gas hourly space velocity, GHSV, of 40,000/hr, while the temperature of the inlet of the catalyst-coated honeycomb sample was kept at a predetermined temperature varying between 350°C and 450°C at regular intervals of 50°C, and the gas running out of the outlet of the sample was continuously measured, using a chemiluminescent NOx meter, to determine the NOx concentration in the gas.

The steady-state NOx concentration value was read out, and the NOx conversion was obtained from the readout value and the NOx concentration in the exhaust gas as sampled out just before the inlet of the catalyst-coated honeycomb sample, in accordance with the following equation. The data obtained are shown in Table 1, Table 2, Table 3 and Table 4.

$$NOx \ Conversion \ (\%) = [(A-B)/A] \times 100$$

(where A is the NOx concentration just before the inlet of the catalyst-coated honeycomb sample; and B is the NOx concentration just after the outlet of the catalyst-coated honeycomb sample.)

Table 1

| Catalyst-Coated Honeycomb Sample | NOx Conversion (%) at Different Temperatures | | |
|---|---|---|---|
| | 350°C | 400°C | 450°C |
| A-1 | 43 | 40 | 28 |
| A-2 | 38 | 32 | 26 |
| A-3 | 55 | 65 | 54 |
| A-4 | 35 | 38 | 24 |
| A-5 | 32 | 44 | 31 |
| A-6 | 39 | 46 | 30 |
| A-7 | 44 | 48 | 33 |
| A-8 | 45 | 52 | 38 |
| A-9 | 68 | 66 | 54 |
| A-10 | 45 | 44 | 33 |
| B-1 | 3 | 10 | 16 |
| B-2 | 0 | 31 | 38 |
| B-3 | 0 | 4 | 0 |
| B-4 | 0 | 13 | 8 |

Table 2

| Catalyst-Coated Honeycomb Sample | NOx Conversion (%) at Different Temperatures | | |
|---|---|---|---|
| | 350°C | 400°C | 450°C |
| A-11 | 63 | 55 | 31 |
| A-12 | 53 | 50 | 33 |
| A-13 | 75 | 69 | 41 |
| A-14 | 64 | 53 | 32 |
| A-15 | 58 | 52 | 30 |
| A-16 | 61 | 53 | 29 |
| A-17 | 60 | 54 | 34 |
| A-18 | 68 | 59 | 34 |
| A-19 | 82 | 74 | 46 |
| A-20 | 67 | 60 | 38 |
| A-21 | 60 | 54 | 36 |
| A-22 | 66 | 59 | 40 |
| A-23 | 61 | 57 | 35 |
| A-24 | 69 | 64 | 39 |
| A-25 | 57 | 51 | 33 |
| A-26 | 65 | 61 | 37 |
| B-1 | 3 | 10 | 16 |
| B-2 | 0 | 31 | 38 |
| B-3 | 0 | 4 | 0 |
| B-4 | 22 | 6 | 0 |

Table 3

| Catalyst-Coated Honeycomb Sample | NOx Conversion (%) at Different Temperatures | | |
|---|---|---|---|
| | 350°C | 400°C | 450°C |
| A-27 | 61 | 57 | 51 |
| A-28 | 56 | 51 | 47 |
| A-29 | 71 | 65 | 59 |
| A-30 | 60 | 55 | 51 |
| A-31 | 58 | 54 | 45 |
| A-32 | 62 | 59 | 50 |
| A-33 | 59 | 52 | 52 |
| A-34 | 65 | 57 | 55 |
| B-1 | 3 | 10 | 16 |
| B-2 | 0 | 31 | 38 |
| B-3 | 0 | 4 | 0 |

Table 4

| Catalyst-Coated Honeycomb Sample | NOx Conversion (%) at Different Temperatures | | |
|---|---|---|---|
| | 350°C | 400°C | 450°C |
| A-35 | 57 | 50 | 39 |
| A-36 | 52 | 45 | 35 |
| A-37 | 70 | 62 | 52 |
| A-38 | 53 | 52 | 43 |
| A-39 | 56 | 51 | 40 |
| A-40 | 55 | 48 | 37 |
| A-41 | 55 | 50 | 35 |
| A-42 | 57 | 51 | 41 |
| A-43 | 59 | 52 | 43 |
| A-44 | 61 | 53 | 45 |
| A-45 | 63 | 55 | 44 |
| A-46 | 62 | 52 | 42 |
| A-47 | 59 | 54 | 43 |
| A-48 | 59 | 53 | 45 |
| B-1 | 3 | 1 | 16 |
| B-2 | 0 | 31 | 38 |
| B-3 | 0 | 4 | 0 |
| B-6 | 15 | 9 | 3 |

The results set forth in Tables 1 - 4 show that the catalyst-coated honeycombs (A-1 to A-48) of the present invention is superior to produce higher NOx conversion and Nox removing activity than the catalyst-coated honeycombs (B-1 to B-6) of Comparative Examples in the atmosphere containing excess oxygen having much higher oxygen content, namely A/F of 22 ($O_2$ content = 7.5 %), than the stoichiometric amount of oxygen. Comparing the catalysts of these Examples of the present invention with each other with respect to their exhaust gas-purifying ability, it is found that many of those in which the component (c) is comprised of more than two elements are better than those comprising only one element as the component (c). In particular, it is found that the samples in which the component (c) is comprised of two rare earth elements have much higher catalytic activity.

Test Example 2 (for testing NOx removal by aged catalysts in gasoline lean burn engine):

The catalyst-coated honeycomb samples (A-1 to A-48) obtained in Examples 1 to 48 and the catalyst-coated honeycomb samples (B-1 to B-6) obtained in Comparative Examples 1 to 6 were, after having been aged at a high temperature in exhaust gas containing water vapor and SOx, tested to determine the NOx-removing activity of the aged samples. The aging condition was as follows: Secondary air was added to exhaust gas from an ordinary gasoline engine, whereby the exhaust gas was made to have A/F of 16.5 ($O_2$ content = 4.2 %). The SOx concentration in the resulting exhaust gas was 30 ppm. This exhaust gas was passed through each catalyst-coated honeycomb sample at a gas hourly space velocity, GHSV, of 250,000/hr for 20 hours, while the temperature of the center part of the catalyst-coated honeycomb sample was kept at 700°C. After having been thus aged, each sample was tested under the same condition as in Test Example 1 to evaluate the NOx-removing activity of the aged sample. The data obtained are shown in Table 5, Table 6, Table 7 and Table 8.

Table 5

| Catalyst-Coated Honeycomb Sample | NOx Conversion (%) at Different Temperatures | | |
|---|---|---|---|
| | 350°C | 400°C | 450°C |
| A-1 | 52 | 44 | 41 |
| A-2 | 47 | 46 | 41 |
| A-3 | 79 | 76 | 67 |
| A-4 | 51 | 55 | 48 |
| A-5 | 53 | 58 | 46 |
| A-6 | 49 | 53 | 43 |
| A-7 | 56 | 54 | 50 |
| A-8 | 58 | 60 | 51 |
| A-9 | 79 | 77 | 70 |
| A-10 | 56 | 50 | 45 |
| B-1 | 0 | 0 | 8 |
| B-2 | 0 | 12 | 20 |
| B-3 | 8 | 23 | 30 |
| B-4 | 0 | 8 | 12 |

Table 6

| Catalyst-Coated Honeycomb Sample | NOx Conversion (%) at Different Temperatures | | |
|---|---|---|---|
| | 350°C | 400°C | 450°C |
| A-11 | 65 | 63 | 55 |
| A-12 | 57 | 59 | 56 |
| A-13 | 79 | 79 | 66 |
| A-14 | 65 | 61 | 57 |
| A-15 | 61 | 59 | 53 |
| A-16 | 62 | 60 | 50 |
| A-17 | 63 | 62 | 59 |
| A-18 | 71 | 67 | 60 |
| A-19 | 82 | 82 | 70 |
| A-20 | 69 | 65 | 63 |
| A-21 | 63 | 60 | 61 |
| A-22 | 69 | 66 | 64 |
| A-23 | 63 | 64 | 60 |
| A-24 | 71 | 70 | 68 |
| A-25 | 59 | 57 | 51 |
| A-26 | 67 | 65 | 63 |
| B-1 | 0 | 0 | 8 |
| B-2 | 0 | 12 | 20 |
| B-3 | 8 | 23 | 30 |
| B-5 | 28 | 17 | 12 |

Table 7

| Catalyst-Coated Honeycomb Sample | NOx Conversion (%) at Different Temperatures | | |
|---|---|---|---|
| | 350°C | 400°C | 450°C |
| A-27 | 64 | 60 | 55 |
| A-28 | 59 | 55 | 51 |
| A-29 | 71 | 70 | 61 |
| A-30 | 65 | 63 | 58 |
| A-31 | 62 | 60 | 53 |
| A-32 | 73 | 65 | 57 |
| A-33 | 75 | 70 | 60 |
| A-34 | 72 | 69 | 65 |
| B-1 | 0 | 0 | 8 |
| B-2 | 0 | 12 | 20 |
| B-3 | 8 | 23 | 30 |

Table 8

| Catalyst-Coated Honeycomb Sample | NOx Conversion (%) at Different Temperatures | | |
|---|---|---|---|
| | 350°C | 400°C | 450°C |
| A-35 | 65 | 57 | 54 |
| A-36 | 60 | 52 | 51 |
| A-37 | 73 | 67 | 62 |
| A-38 | 59 | 55 | 51 |
| A-39 | 63 | 55 | 51 |
| A-40 | 60 | 53 | 47 |
| A-41 | 59 | 55 | 45 |
| A-42 | 65 | 57 | 53 |
| A-43 | 66 | 61 | 56 |
| A-44 | 67 | 59 | 55 |
| A-45 | 69 | 63 | 61 |
| A-46 | 70 | 61 | 59 |
| A-47 | 70 | 63 | 60 |
| A-48 | 68 | 60 | 58 |
| B-1 | 0 | 0 | 8 |
| B-2 | 0 | 12 | 20 |
| B-3 | 8 | 23 | 30 |
| B-6 | 22 | 15 | 10 |

The results of tables 6-8 show that the NOx-removing activity of the catalyst-coated honeycombs (A-1 to A-48) of the present invention was, even after having been subjected to the aging test using such high-temperature exhaust gas containing water vapor and SOx, not lowered but was rather greatly increased. These test data verify that the catalyst of the present invention is highly durable in high-temperature exhaust gas containing water vapor and SOx. As in Test Example 1, the catalyst activity of the samples in which the component (c) was comprised of two elements, especially two rare earth elements was higher than that of the other samples.

Effect of the invention

The catalyst purifying exhaust gases of the present invention is better than any other conventional catalysts purifying gases in that the former can more efficiently reduce and remove nitrogen oxides from exhaust gases that contains an excess oxygen over the stoichiometric amount thereof, at higher NOx conversion than the latter. In addition, the catalyst of the invention is characterized in that it is highly durable in high-temperature exhaust gas containing water vapor and SOx and that its nitrogen oxide-removing catalytic activity is increased after having been aged in such high-temperature exhaust gas containing water vapor and SOx.

Accordingly, the catalyst purifying exhaust gases of the present invention is useful in practical use for removing nitrogen oxides from exhaust gases exhausted from internal combustion engines, boilers, gas turbines, and so on.

**Claims**

1. A catalyst for purifying exhaust gases comprising (a) iridium, (b) at least one alkali metal or alkaline earth metal, and (c) at least one element of Group IIIB or Group IVA in the Periodic Table (except carbon) or at least one iron family element, as carried by an oxide of at least one titanium family element.

2. A catalyst according to claim 1 wherein the element of Group IIIB in the Periodic Table is yttrium or at least one rare earth element.

3. A catalyst according to claim 2 wherein the rare earth element is lanthanum, cerium, praseodymium or neodymium.

4. A catalyst according to any of claims 1 to 3 wherein the element of Group IVA in the Periodic Table is silicon, germanium or tin.

5. A catalyst according to any of claims 1 to 4 wherein the iron family element is nickel.

6. A catalyst according to any of claims 1 to 5 wherein component (c) comprises two or more elements.

7. A catalyst according to any one of claims 1 to 6 wherein the catalyst purifies exhaust gas comprising a reducing component which contains hydrocarbons and carbon monoxide, oxygen in such an amount that is over the stoichiometric amount of oxygen necessary for oxidizing the said reducing component, and nitrogen oxides.

8. A catalyst-coated structure body purifying exhaust gases which comprises a supporting substrate of a refractory material and the catalyst of any of claims 1 to 7 over the surface of the supporting substrate.

9. A method for purifying exhaust gas which comprises contacting exhaust gas comprising a reducing component which contains hydrocarbons and carbon monoxide, oxygen in such an amount that is over the stoichiometric amount of oxygen necessary for oxidizing the said reducing component, and nitrogen oxides, with the catalyst of any of claims 1 to 7.